# EUROPEAN PATENT APPLICATION

(11) **EP 4 708 464 A1**
(43) Date of publication of application: **11.03.2026**
(21) Application number: 24898095.5
(22) Date of filing: 26.11.2024
(51) Int. Cl.: H01M 10/658, H01M 10/6554, H01M 50/502, H01M 50/514, H01M 50/507, H01M 50/204

(54) **BATTERY MODULE**

(30) Priority: 29.11.2023 KR 20230169733
(71) Applicant: LG Energy Solution, Ltd., Seoul 07335 (KR)
(72) Inventor: KIM, Hyun Jung, Daejeon 34122 (KR); LEE, Jung Hoon, Daejeon 34122 (KR)
(74) Representative: Plasseraud IP
(86) International application number: PCT/KR2024/018916
(87) International publication number: WO 2025/116501

(57) **Abstract**

Provided is a battery module comprising: a first cell stack and a second cell stack, each with a plurality of battery cells stacked; a housing having an inner space in which the first cell stack and the second cell stack are accommodated; an insulating fluid configured to flow in the inner space of the housing; and a barrier assembly disposed between the first cell stack and the second cell stack, wherein the barrier assembly includes: a heat insulation cover configured to be capable of blocking heat propagation between the first cell stack and the second cell stack; and a heat dissipation member in contact with the insulating fluid and including a material having a higher thermal conductivity than the heat insulation cover.

## Description

### Technical Field

The present disclosure relates to a battery module.

### Background Art

Secondary batteries may be charged and discharged, and thus, are widely utilized in mobile devices such as a digital camera, a mobile phone, and a laptop, and in particular, have recently gained attention as an energy source of an electric vehicle, an energy storage system (ESS), or the like.

As the electric vehicle or the ESS demands large-capacity and high-output power, large-capacity battery devices are widely used, such as a battery module or a battery pack with multiple secondary batteries (battery cells) accommodated within a housing. In particular, technology that forms a submodule with a plurality of secondary batteries and assembles these submodules to form a large-scale battery module is recently being utilized.

As above, in a battery module composed of a plurality of submodules, the battery module has multiple secondary batteries placed inside, and thus, has a problem in that high-temperature heat or flames generated in any one submodule are rapidly propagated to other adjacent submodules.

In addition, as a battery module has multiple secondary batteries placed inside, a structure for cooling the battery module rapidly and effectively is required.

### Detailed Description of the Invention

### Technical Goals

The present disclosure is conceived to solve at least some of the above-described problems in the related art and provides a battery module composed of a plurality of submodules (or a plurality of cell stacks), the battery module having a structure that may block heat or flame propagation between the submodules (or between the cell stacks).

Further, the present disclosure is intended to provide a battery module composed of a plurality of submodules (or a plurality of cell stacks), the battery module having excellent cooling performance.

Further, the present disclosure is intended to provide a battery module having a multifunction barrier assembly that may achieve heat insulation between a plurality of submodules (or a plurality of cell stacks) and a cooling effect of a coolant simultaneously.

### Technical solutions

To achieve the above goals, according to example embodiments, provided is a battery module including a first cell stack and a second cell stack, each with a plurality of battery cells stacked, a housing having an internal space in which the first cell stack and the second cell stack are accommodated, an insulating fluid configured to flow in the internal space of the housing, and a barrier assembly positioned between the first cell stack and the second cell stack, and the barrier assembly includes a heat insulating cover configured to block thermal propagation between the first cell stack and the second cell stack and a heat dissipation member in contact with the insulating fluid and including a material with higher thermal conductivity than the heat insulating cover.

According to an example embodiment, the heat insulating cover may include a first heat insulating part and a second heat insulating part positioned along a direction in which the first cell stack and the second cell stack are positioned, and the heat dissipation member may be positioned between the first heat insulating part and the second heat insulating part.

According to an example embodiment, the heat dissipation member may have a plate-type structure, and the first heat insulating part may cover at least a portion of an area of a first surface of the heat dissipation member, and the second heat insulating part may cover at least a portion of an area of a second surface that is an opposite surface to the first surface of the heat dissipation member.

According to an example embodiment, the heat dissipation member may further include a plurality of guide grooves positioned on each of the first surface and the second surface and configured to guide a flow direction of the insulating fluid.

According to an example embodiment, at least one of the plurality of guide grooves may extend in a direction intersecting with a stacking direction of the plurality of battery cells.

According to an example embodiment, at an edge of the heat dissipation member, the plurality of guide grooves of the first surface may be connected to the plurality of guide grooves of the second surface.

According to an example embodiment, the heat insulating cover may further include one or more first opening parts positioned in the first heat insulating part and one or more second opening parts positioned in the second heat insulating part.

According to an example embodiment, the one or more first opening parts and at least a portion of an area of the one or more second opening parts may be positioned to face each other with the heat dissipation member in between.

According to an example embodiment, each of the one or more first opening parts and the one or more second opening parts may be provided in plurality and positioned along a stacking direction of the plurality of battery cells.

According to an example embodiment, an insertion hole may be provided at an edge of the heat insulating cover to allow insertion of the heat dissipation member.

According to an example embodiment, the battery module may further include a first busbar assembly configured to electrically connect the plurality of battery cells of the first cell stack and positioned to face one surface of the barrier assembly and a second busbar assembly configured to electrically connect the plurality of battery cells of the second cell stack and positioned to face an opposite surface to the one surface of the barrier assembly.

According to an example embodiment, the heat insulating cover may be coupled to each of the first busbar assembly and the second busbar assembly.

According to an example embodiment, the heat insulating cover may be formed of an insulating material.

According to an example embodiment, at least one of the first busbar assembly and the second busbar assembly may include a connection terminal connected to one or more terminals exposed outside the housing.

According to an example embodiment, the first cell stack and the second cell stack may be positioned along a direction perpendicular to a stacking direction of the plurality of battery cells in the internal space of the housing.

### Effects of the Invention

According to the example embodiments, it is possible to implement a battery module in which thermal runaway performance is enhanced as a barrier assembly blocks heat or flame propagation between a plurality of submodules (or a plurality of cell stacks).

Further, according to the example embodiments, it is possible to implement a battery module having high cooling efficiency as a coolant flowing inside a housing directly cools a battery cell.

Further, according to the example embodiments, it is possible to reduce a temperature variation of each portion of a battery module while the battery module has excellent cooling performance throughout as a coolant after cooling any one submodule (or cell stack) dissipates heat and cools through a barrier assembly before flowing into another submodule (or cell stack).

Further, according to the example embodiments, it is possible to implement heat insulation between components within a battery module and a heat dissipation effect of a coolant simultaneously while providing a simple structure through a barrier assembly formed of a combination of a heat insulating cover and a heat dissipation member.

### Brief Description of Drawings

FIG. 1 is a perspective view of a battery module.
FIG. 2 is an exploded perspective view of a battery module.
FIG. 3 is an exploded perspective view of a submodule included in a battery module.
FIG. 4 is a perspective view of a barrier assembly.
FIG. 5 is an exploded perspective view of a barrier assembly.
FIG. 6 is an exploded perspective view of a barrier assembly viewed from a different angle than FIG. 5.
FIG. 7 is an example cross-sectional view taken along section I-I' of FIG. 4.
FIG. 8 is a reference diagram for illustrating a coupling of a submodule and a barrier assembly.
FIG. 9 is a reference diagram for illustrating a flow of an insulating fluid within a battery module.
FIG. 10 is an example cross-sectional view taken along section II-II' of FIG. 4.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described in the specification and the configurations illustrated in the drawings are no more than the most preferred example embodiments of the present disclosure and do not fully cover the technical idea of the present disclosure. Accordingly, it should be understood that there may be various alternatives, equivalents, and modification examples when this application is filed.

Identical reference numerals or signs in each drawing attached to the specification may refer to components or elements performing substantially identical functions. For convenience of description and understanding, the same reference numeral or sign may be used for description in different example embodiments. In other words, even though elements with the same reference numeral are illustrated in a plurality of drawings, not all of the plurality of drawings may represent a single example embodiment.

In the following description, a singular expression includes a plural expression unless apparently otherwise defined by context. It should be understood that terms such as "comprise or include" and "form" are intended to indicate the presence of a feature, a number, a step, an operation, an element, a component, or a combination thereof described in the specification and not intended to exclude the possibility of the presence or addition of one or more other features, numbers, steps, operations, elements, components, or combinations thereof in advance.

In addition, expressions such as upper side, upper portion, above, lower side, lower portion, below, side surface, front surface, and rear surface are represented hereinafter with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, a using order, an arrangement sequence, or the like of an element combined with an ordinal number is not to be construed as limited by the ordinal number. In some cases, each ordinal number may also be used by replacing each other.

Hereinafter, example embodiments of the present disclosure are described with reference to the accompanying drawings. However, the present disclosure is not limited to the example embodiments described. For example, a person of ordinary skill in the art who understands the idea of the present disclosure may suggest other example embodiments included within the scope of the idea of the present disclosure through the addition, change, or deletion of an element, which are also included within the scope of the present disclosure though. The shapes, sizes, and the like of elements may be exaggerated in the drawings for clearer description.

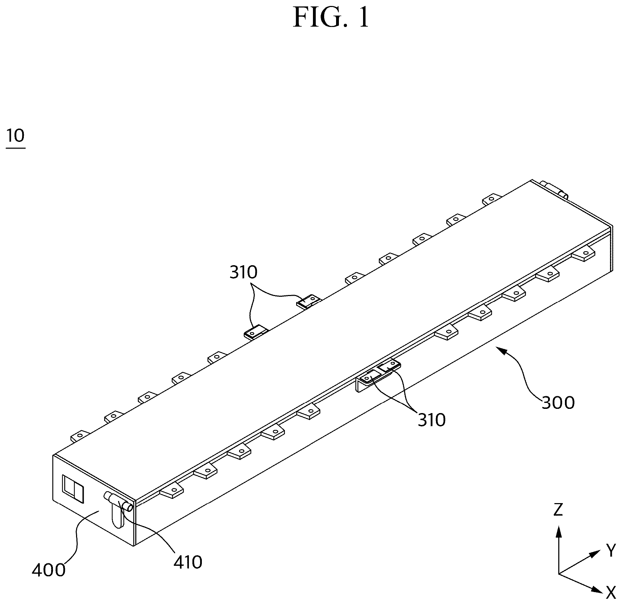

FIG. 1 is a perspective view of a battery module 10.

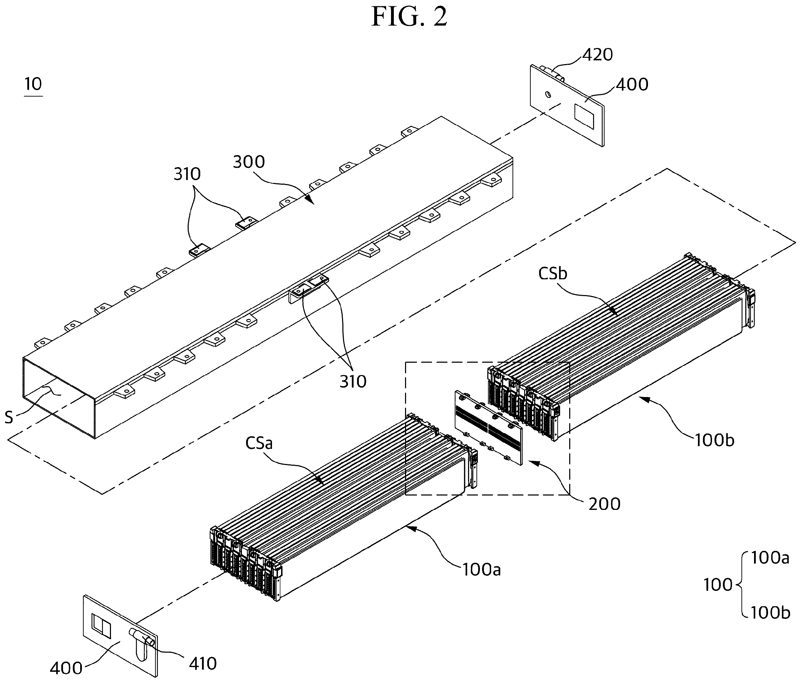

FIG. 2 is an exploded perspective view of the battery module 10.

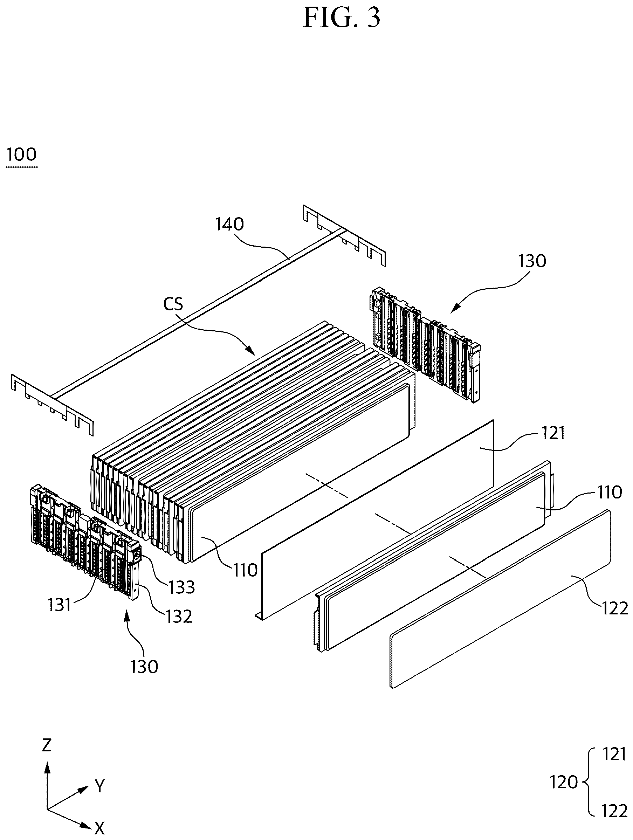

FIG. 3 is an exploded perspective view of a submodule 100 included in the battery module 10.

The battery module 10 according to example embodiments may include a plurality of submodules 100, each including a plurality of battery cells 110, an insulating fluid for cooling the battery cells 110, and a housing 300 in which these are accommodated.

In the following description, the "battery module 10" generally refers to energy storage devices formed as a plurality of battery cells are electrically connected. In other words, the "battery module 10" of the present disclosure may be understood as various types of energy storage devices such as a battery pack and an energy storage system (ESS), in addition to a battery module in a narrow sense.

The battery module 10 may include the plurality of submodules 100. For example, referring to FIG. 2, the battery module 10 may include a first submodule 100a and a second submodule 100b positioned in parallel within the housing 300. The first submodule 100a and the second submodule 100b may be mutually assembled to form at least a portion of one battery module 10.

Each of the submodules 100a, 100b may include the plurality of battery cells 110 and may be configured to store or discharge electrical energy.

Referring to FIG. 3, any one submodule 100 may include a cell stack CS including the battery cells 110 stacked in one direction (for example, an X-axis direction) and a busbar assembly 130 electrically connected to the cell stack CS. The submodule 100 illustrated in FIG. 3 may correspond to any one of the first submodule 100a or the second submodule 100b illustrated in FIG. 2.

The cell stack CS may include the plurality of battery cells 110 and one or more protective members 120 for protecting the battery cells 110.

In the cell stack CS, the plurality of battery cells 110 may be stacked and positioned in one direction. In the following description, a stacking direction of the battery cells 110 included in the cell stack CS is referred to as a "cell stacking direction. "

At least one of the battery cells 110 of the cell stack CS may be a secondary battery that may output or store electrical energy. For example, the battery cell 110 may be a pouch-type secondary battery having a structure in which an electrode assembly is accommodated within a pouch having flexibility. However, the battery cell 110 included in the cell stack CS is not limited to the pouch-type secondary battery. For example, the battery cell 110 may also be formed as a prismatic secondary battery in which an electrode assembly is accommodated within a prismatic case having predetermined stiffness or a cylindrical secondary battery in which an electrode assembly is accommodated within a cylindrical case. Alternatively, the battery cell 110 may also be formed as a bundle type in which a plurality of pouch-type secondary batteries are grouped.

The cell stack CS may further include various types of protective members 120 for protecting the battery cells 110. For example, referring to FIG. 3, the cell stack CS may include various protective members 120 such as a cooling plate 121 for smoothly dissipating thermal energy generated in the battery cells 110 and a compression pad 122 that may prevent a swelling phenomenon by applying appropriate surface pressure to the battery cells 110. However, the protective members 120 are not limited to those illustrated in the drawings. For example, at least one of a plurality of protective members 120 may be a heat insulating sheet (not shown) positioned between the plurality of battery cells 110 to block thermal propagation between the battery cells 110.

The plurality of battery cells 110 of the cell stack CS may be electrically connected to each other through the busbar assembly 130. The busbar assembly 130 may include a plurality of busbars 131 electrically connected to the battery cells 110 and a busbar frame 132 supporting the busbars 131.

The busbars 131 may be formed of a conductive material (for example, copper) and perform a role of electrically connect the plurality of battery cells 110 to each other. The busbars 131 may be in a state fixed to the busbar frame 132 to be electrically connected to the battery cells 110.

The busbar frame 132 may support the busbars 131 to be stably connected to the battery cells 110. The busbar frame 132 may include a non-conductive material (for example, plastic) having predetermined stiffness and structurally support the plurality of busbars 131.

The busbar assembly 130 may face at least one side of the cell stack CS. For example, referring to FIG. 3, the busbar assembly 130 may be provided as a pair and positioned to face the cell stack CS in a direction (for example, a Y-axis direction) perpendicular to the cell stacking direction.

The submodule 100 may further include a connection substrate 140 connected to a pair of busbar assemblies 130. One side and another side of the connection substrate 140 may be connected to one and the other of the pair of busbar assemblies 130, respectively. At least a portion of the connection substrate 140 may be formed as a flexible printed circuit board (FPCB). Accordingly, at least the portion of the connection substrate 140 may be positioned in a bent or folded state.

Various sensing members such as a temperature sensor for sensing the temperature of the cell stack CS and a voltage sensor for sensing the voltage of a busbar may be connected to the connection substrate 140. Information sensed by the sensing members may be transmitted to a controller (for example, a battery management system (BMS)) positioned inside or outside the battery module 10.

However, those illustrated in FIGS. 2 and 3 are merely example configurations of the submodule 100, and the submodule 100 included in the battery module 10 according to example embodiments may be formed differently from those illustrated in the drawings. In other words, the submodule 100 is one of the components of the battery module 10, representing a single unit formed as the plurality of battery cells 110 are assembled, and a specific structure or shape thereof may be different from FIGS. 2 and 3.

For example, the submodule 100 may also represent a cell stack structure with the plurality of battery cells 110 assembled. In this case, the battery module 10 may also be composed of the first submodule 100a and the second submodule 100b, which are cell stack structures in which the plurality of battery cells 110 are stacked, and multiple components for electrical and structural connections thereof.

One battery module 10 may be formed as a plurality of these submodules 100 are assembled. For example, referring to FIG. 2, the first submodule 100a having a first cell stack CSa and the second submodule 100b having a second cell stack CSb may be mutually assembled to form the entire battery module 10. In this case, the first submodule 100a and the second submodule 100b may be positioned along a direction (for example, the Y-axis direction) perpendicular to the cell stacking direction. Hereinafter, a direction in which the first submodule 100a and the second submodule 100b are positioned is referred to as a "length direction of the battery module 10."

The plurality of submodules 100 may be accommodated in an internal space S of the housing 300. The housing 300 may be formed of a material having predetermined stiffness to protect the plurality of submodules 100 accommodated in the internal space S and other components from external impacts. For example, the housing 300 may include a metal material such as aluminum, iron, and stainless steel.

As illustrated in FIG. 2, the housing 300 may be formed as an integrated mono frame of which both sides are opened. The components within the battery module 10, including the plurality of submodules 100, may be accommodated within the housing 300 through an opened portion of the housing 300.

A terminal 310 for charging and discharging the first submodule 100a and the second submodule 100b may be positioned on an outer side of the housing 300. The terminal 310 may be exposed outside the housing 300 and may be electrically connected to the battery cells 110 of the first submodule 100a and the second submodule 100b through a connection terminal 133 positioned in the busbar assemblies 130 of the first submodule 100a and the second submodule 100b. For a connection between the terminal 310 and the connection terminal 133 of the busbar assembly 130, a connection hole may be formed at a portion of the housing 300 where the terminal 310 is positioned.

However, a specific structure of the housing 300 is not limited to those illustrated in the drawings and may have any shapes with the internal space S in which the plurality of submodules 100 may be accommodated. For example, a housing may be formed as a combination of a U-shaped lower frame in which the plurality of submodules 100 are seated and of which an upper portion and both side portions are opened and an upper cover coupled to the upper portion of the lower frame to cover upper surfaces of the submodules. Alternatively, a housing may also be formed as a combination of sub-housings in which each submodule is accommodated individually.

After multiple components including the plurality of submodules 100 are all accommodated within the housing 300, the opened portion of the housing 300 may be closed by an end plate 400. For example, referring to FIG. 2, as a pair of end plates 400 is coupled to both sides of the housing 300 with the integrated mono frame structure, the internal space S of the housing 300 may be closed.

A coolant for cooling the battery cells 110 may flow in the internal space S of the housing 300. The coolant may be configured to flow in the internal space S of the housing 300 and cool the battery cells 110 while being in direct contact with the battery cells 110. In this case, compared to an existing battery module structure in which a coolant cools battery cells while flowing within a separate heat sink structure positioned at one side of a cell stack, cooling performance may be greatly enhanced.

According to example embodiments, since the coolant is in direct contact with the battery cells 110 within the housing 300, it is preferable that the coolant is formed as an insulating fluid with no electrical conductivity. An example of the insulating fluid includes an insulating oil. However, in addition to the insulating oil, any fluids that may have a cooling effect while having no electrical influence on electrical components such as the battery cells 110 may be applied to the coolant without limitation. Hereinafter, the coolant having these properties is referred to as an "insulating fluid."

The insulating fluid may be injected into the internal space S of the housing 300 from the outside of the battery module 10 and circulate within the housing 300, and then, be discharged back outside the battery module 10. For example, referring to FIGS. 1 and 2, an inlet 410 through which the insulating fluid may be injected and an outlet 420 through which the insulating fluid may be discharged may be provided in the pair of end plates 400. Accordingly, the insulating fluid injected through the inlet 410 positioned at one side of the housing 300 may cool the battery cells 110 while passing through the plurality of submodules 100 and then be discharged outside the housing 300 through the outlet 420 positioned at another side of the housing 300. However, the inlet 410 and the outlet 420 are not necessarily positioned in the end plates 400 and may also be positioned in the housing 300.

Although not illustrated in detail in the drawings, a sealing member may be positioned on an inner side of the end plate 400 to prevent the insulating fluid from leaking between the housing 300 and the end plate 400.

According to example embodiments, the plurality of submodules 100 are accommodated within the housing 300, and in this case, to prevent thermal energy generated in one submodule (for example, the first submodule 100a) from having an adverse influence on another neighboring submodule (for example, the second submodule 100b), blocking thermal propagation between the submodules 100 is required. For example, in a structure where the plurality of submodules 100 are assembled within the housing 300, when thermal runaway occurs in one submodule, flame transfer to another adjacent submodule may be easily generated, and thus, appropriately blocking such heat and flame propagation is required.

In addition, while the insulating fluid passes through the plurality of submodules 100, the temperature of the coolant gradually increases, which may cause a temperature variation between the submodules. Therefore, a configuration that may appropriately dissipate thermal energy of the insulating fluid circulating within the housing 300 is required.

To this end, the battery module 10 according to example embodiments may further include a barrier assembly 200 that may be positioned between the plurality of submodules 100 to perform both functions of blocking thermal propagation and dissipating heat of the insulating fluid.

The barrier assembly 200 may be configured to block thermal propagation between the submodules and cool the coolant passing through the barrier assembly 200. For example, referring to FIG. 2, the barrier assembly 200 may be positioned between the first submodule 100a and the second submodule 100b to block the propagation of thermal energy generated in the first submodule 100a to the second submodule 100b. Alternatively, the barrier assembly 200 may be positioned to face side surfaces of the cell stacks CSa, CSb, in other words, surfaces of the cell stacks CSa, CSb perpendicular to the cell stacking direction, and with respect to two cell stacks CSa, CSb, may be positioned between the two cell stacks CSa, CSb positioned in a row to block thermal propagation between the cell stacks.

In addition, the barrier assembly 200 may be configured for the insulating fluid after passing through the first submodule 100a to pass through and perform a role of dissipating the thermal energy of the insulating fluid while the insulating fluid passes through.

To effectively perform thermal propagation between the submodules and cooling the insulating fluid, the barrier assembly 200 may be formed as a composite structure in which a heat insulating cover and a heat dissipation member formed of different materials are coupled.

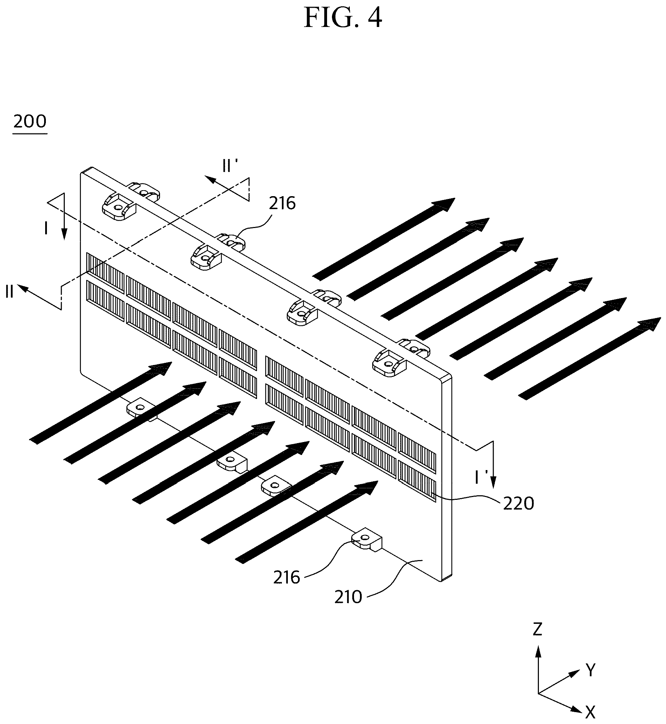

Hereinafter with reference to FIGS. 4 to 8, the barrier assembly 200 is described in detail.

FIG. 4 is a perspective view of the barrier assembly 200.

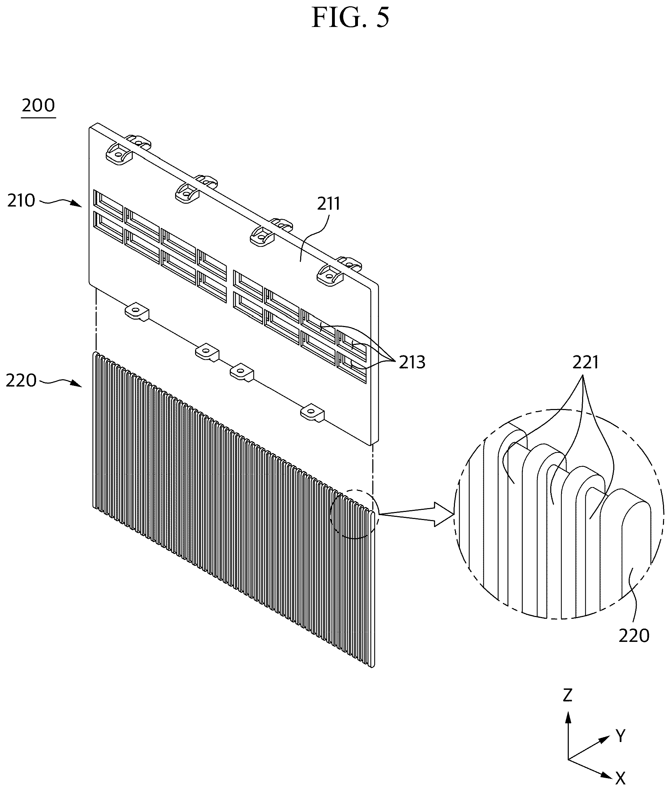

FIG. 5 is an exploded perspective view of the barrier assembly 200.

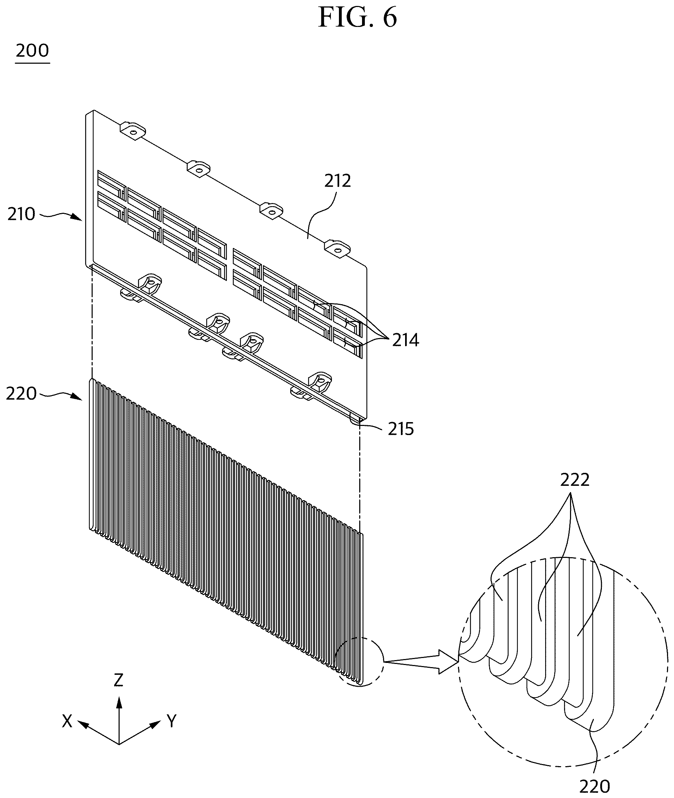

FIG. 6 is an exploded perspective view of the barrier assembly 200 viewed from a different angle than FIG. 5.

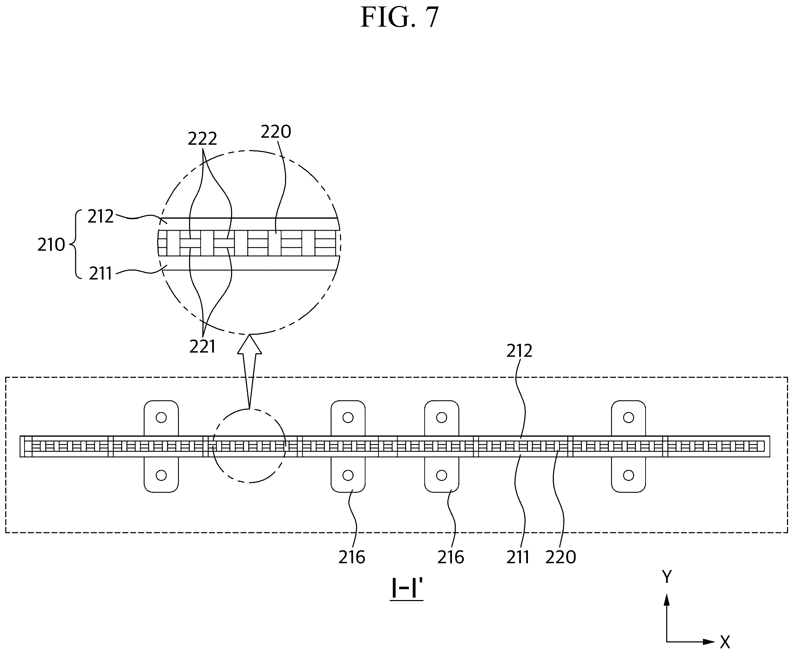

FIG. 7 is an example cross-sectional view taken along section I-I' of FIG. 4.

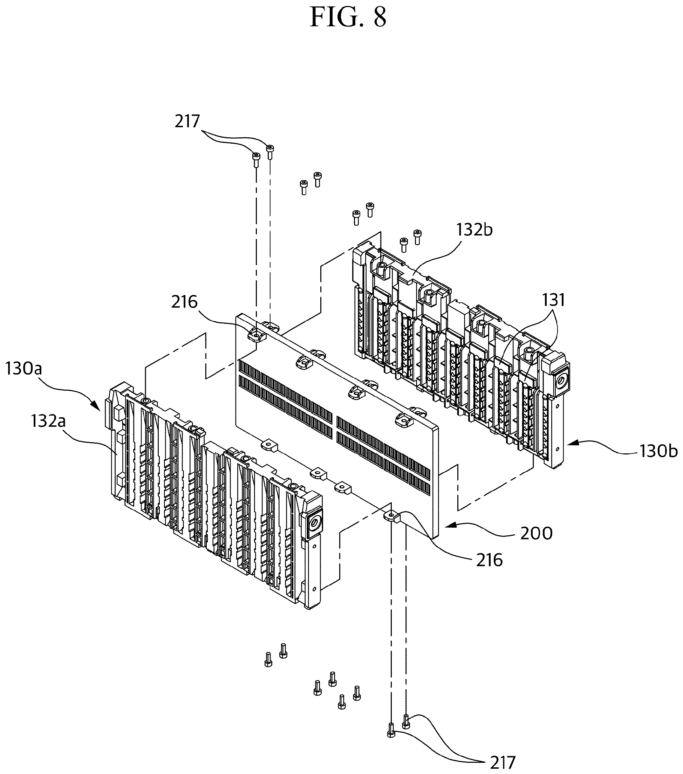

FIG. 8 is a reference diagram for illustrating a coupling of a submodule and the barrier assembly 200.

Since the barrier assembly 200, a submodule, and a battery module described in FIGS. 4 to 8 include all features of the barrier assembly 200, the submodule 100, and the battery module 10 described above in FIGS. 1 to 3, an overlapping description may be omitted.

The barrier assembly 200 according to example embodiments may include a heat insulating cover 210 that may block thermal propagation between the submodules 100 of FIG. 2 and a heat dissipation member 220 that may cool an insulating fluid.

The heat insulating cover 210 may be positioned between the submodules 100 to block a transfer of heat or flames generated in one submodule (for example, the first submodule 100a) to another adjacent submodule (for example, the second submodule 100b). To this end, the heat insulating cover 210 may include a material having heat resistance and thermal insulation. For example, at least a portion of the heat insulating cover 210 may be formed of a resin material or a non-conductive metal material with low thermal conductivity and excellent heat resistance. For more excellent thermal insulation effects, at least a portion of the heat insulating cover 210 may include a material having high heat resistance and thermal insulation such as mica, ceramic wool, and aerogel. However, the heat insulating cover 210 is not limited to the materials described above and may be formed of anything that may not be collapsed structurally even in a thermal runaway situation of a submodule and may prevent heat or flames from propagating to another adjacent submodule.

Referring to FIGS. 4 to 6, the heat insulating cover 210 may be provided as a plate-type structure having an area corresponding to one surface of the submodule 100 of FIGS. 2 and 3. One side surface of the heat insulating cover 210 may face one submodule (for example, the first submodule 100a) and an opposite surface to the one side surface may face another submodule (for example, the second submodule 100b). One or more opening parts 213, 214 may be provided on the heat insulating cover 210, and an insulating fluid flowing one side region of the heat insulating cover 210 may flow to another side region across the heat insulating cover 210 through the opening parts 213, 214.

The barrier assembly 200 according to example embodiments may further include the heat dissipation member 220 for cooling an insulating fluid.

The heat dissipation member 220 may be positioned between the plurality of submodules 100 so that the insulating fluid after passing through one submodule (for example, the first submodule 100a) may be in contact before flowing to another submodule (for example, the second submodule 100b). The insulating fluid may dissipate heat and cool while being in contact with the heat dissipation member 220.

For effective heat dissipation of the insulating fluid, the heat dissipation member 220 may be formed of a material with excellent thermal conductivity. For example, the heat dissipation member 220 may be formed of aluminum with excellent thermal conductivity. However, in addition thereto, any materials having higher thermal conductivity than the heat insulating cover 210 may be applied to the heat dissipation member 220.

The barrier assembly 200 may have a structure in which each of both surfaces of the heat dissipation member 220 is covered by the heat insulating cover 210 including an insulating material. For example, the heat dissipation member 220 may be provided in a plate shape and positioned inside the heat insulating cover 210, and accordingly, the heat insulating cover 210 may cover both surfaces of the heat dissipation member 220.

More specifically, referring to FIGS. 5 and 6, the heat insulating cover 210 may include a first heat insulating part 211 and a second heat insulating part 212 with a predetermined gap formed in between, and the heat dissipation member 220 may be positioned between the first heat insulating part 211 and the second heat insulating part 212. Here, the first heat insulating part 211 of the heat insulating cover 210 may be a portion facing the first submodule 100a of FIG. 2, and the second heat insulating part 212 may be a portion facing the second submodule 100b of FIG. 2. The first heat insulating part 211 may cover at least a portion of an area of a first surface of the heat dissipation member 220, and the second heat insulating member may cover at least a portion of an area of a second surface, which is an opposite surface to the first surface of the heat dissipation member 220. According to this structure, even though the heat dissipation member 220 is formed of a metal material, the occurrence of a short circuit between the heat dissipation member 220 and a busbar of a submodule may be prevented in advance.

The barrier assembly 200 may have a structure in which the heat dissipation member 220 is inserted and assembled inside the heat insulating cover 210 at one side of the heat insulating cover 210. For example, referring to FIG. 6, an insertion hole 215 through which the heat dissipation member 220 may be inserted may be provided at an edge of one side of the heat insulating cover 210, and the heat dissipation member 220 may be inserted inside the heat insulating cover 210 through the insertion hole 215 and positioned between the first heat insulating part 211 and the second heat insulating part 212. The insertion hole 215 is formed at a lower portion of the heat insulating cover 210 in the drawings, but this is merely an example, and the insertion hole 215 may also be formed at a side portion or an upper portion of the heat insulating cover 210.

The heat dissipation member 220 inserted through the insertion hole 215, as illustrated in FIG. 7, may be fixed in a state inserted between the first heat insulating part 211 and the second heat insulating part 212. However, unlike what is illustrated in the drawings, in some cases, the heat dissipation member 220 may also be positioned to be spaced apart from the first heat insulating part 211 or the second heat insulating part 212 with a predetermined gap.

Referring to FIGS. 4 to 6 again, a first opening part 213 and a second opening part 214, which are in communication with an inner space of the heat insulating cover 210, may be provided at the first heat insulating part 211 and the second heat insulating part 212 of the heat insulating cover 210. The heat dissipation member 220 positioned inside the heat insulating cover 210 may have a state exposed outside the heat insulating cover 210 through the first opening part 213 and the second opening part 214.

As in FIGS. 4 to 6, the first opening part 213 and the second opening part 214 may be provided in plurality at the first heat insulating part 211 and the second heat insulating part 212, respectively. In this case, at least some of a plurality of first opening parts 213 and a plurality of second opening parts 214 may be positioned at a central area of the heat insulating cover 210 in a height direction (for example, a Z-axis direction) of the barrier assembly 200 and positioned along a width direction (for example, the X-axis direction) of the barrier assembly 200. When the plurality of first opening parts 213 and the plurality of second opening parts 214 are provided, the first opening parts 213 and the second opening parts 214 may be positioned in a plurality of rows along the width direction (for example, the X-axis direction) of the barrier assembly 200.

In this case, an arrangement direction of the plurality of first opening parts 213 and the plurality of second opening parts 214 may be a direction parallel to the stacking direction of the battery cells 110 in the cell stack CS. According to this arrangement structure, an insulating fluid after passing through each of the battery cells 110 may easily flow inside the heat insulating cover 210 through a plurality of opening parts 213, 214 positioned in the cell stacking direction.

However, the size, quantity, and location of the opening part illustrated in the drawings are merely examples, and a specific structure of the opening part may be modified and implemented variously. For example, a single first opening part 213 may be positioned at a central area of the first heat insulating part 211 and may also have a rectangular hole structure having a longer side in the width direction of the barrier assembly 200.

The insulating fluid flowing inside the heat insulating cover 210 through the opening parts 213, 214 may flow along a surface of the heat dissipation member 220, and in this process, may dissipate heat and cool by the heat dissipation member 220.

Guide grooves 221, 222 that may guide a flow direction of the insulating fluid may be provided on the surface of the heat dissipation member 220. For example, referring to FIGS. 5 and 6, a plurality of guide grooves 221, 222 leading the insulating fluid flowing inside the heat insulating cover 210 to flow along the height direction (for example, the Z-axis direction) of the barrier assembly 200 may be positioned on the surface of the heat dissipation member 220.

The guide grooves 221, 222 may be portions corresponding to valleys in a corrugated structure with ridges and valleys formed on the surface of the heat dissipation member 220.

The guide grooves 221, 222, as illustrated in FIGS. 5 and 6, may be formed to extend in the height direction (the Z-axis direction) of the barrier assembly 200. In this case, the height direction (the Z-axis direction) of the barrier assembly 200 may be a direction perpendicular to both the cell stacking direction (for example, the X-axis direction) and the length direction (for example, the Y-axis direction) of the battery module 10 described above. However, the shapes of the guide grooves 221, 222 illustrated in the drawings are merely examples, and a specific structure of the guide grooves 221, 222 may be modified and implemented variously. For example, to further increase a contact area with the insulating fluid, the guide grooves 221, 222 may also be formed to extend in a zigzag shape along the height direction (the Z-axis direction) of the barrier assembly 200.

The guide grooves 221, 222 may be formed on all of both surfaces of the heat dissipation member 220. For example, a first guide groove 221 and a second guide groove 222 may be positioned on a first surface facing the first submodule 100a of FIG. 2 and a second surface facing the second submodule 100b of FIG. 2 of the heat dissipation member 220, respectively.

The first guide groove 221 and the second guide groove 222 may be connected to each other at an edge of the heat dissipation member 220. In other words, an end portion of the first guide groove 221 extending along the height direction of the barrier assembly 200 on the first surface of the heat dissipation member 220 may be connected to the second guide groove 222 of the second surface at the edge of the heat dissipation member 220. Accordingly, the insulating fluid flowing along the first guide groove 221 of the first surface may smoothly flow across the heat dissipation member 220 through the second guide groove 222 of the second surface, and simultaneously, a coolant flow may be formed in a predetermined direction along the surface of the heat dissipation member 220. According to this guide structure, by leading the insulating fluid flowing inside the heat insulating cover 210 through the opening parts 213, 214 to smoothly flow in an upward direction or a downward direction of the barrier assembly 200, the stagnation of a flow of the insulating fluid in the vicinity of the barrier assembly 200 may be prevented.

Meanwhile, the barrier assembly 200 may be coupled to the submodule 100. For example, referring to FIG. 8, one side of the heat insulating cover 210 of the barrier assembly 200 may be coupled to a first busbar assembly 130a of the first submodule 100a of FIG. 2, and another side may be coupled to a second busbar assembly 130b of the second submodule 100b of FIG. 2. In this case, to prevent the occurrence of a short circuit between the heat insulating cover 210 of the barrier assembly 200 and the busbars 131, the heat insulating cover 210 may be formed of an insulating material. Alternatively, to further prevent the short circuit, an insulating cover (not shown) formed of an insulating material may be additionally positioned between the heat insulating cover 210 and the busbar assemblies 130a, 130b.

The barrier assembly 200 may be coupled to the busbar assemblies 130a, 130b in various manners. For example, as illustrated in FIG. 8, a fastening flange 216 may be provided on the heat insulating cover 210 of the barrier assembly 200 to be fastened to busbar frames 132a, 132b of the busbar assemblies 130a, 130b, and as a fastening member 217 is fastened to the fastening flange 216 and the busbar frames 132a, 132b, the heat insulating cover 210 and the busbar frames 132a, 132b may be fixed to each other. However, a coupling manner of the heat insulating cover 210 and the busbar frames 132a, 132b is not limited to what is illustrated in the drawings. For example, the heat insulating cover 210 and the busbar frames 132a, 132b may also be coupled in a mechanical fastening manner through a structure with a protruding part and a groove through which the protruding part is inserted.

As above, the barrier assembly 200 may be coupled to each of the busbar assemblies 130a, 130b of the submodules 100 positioned at both sides to perform a role of structurally connecting the plurality of submodules 100. Accordingly, the structural stability of a configuration within the housing 300 composed of the plurality of submodules 100 may increase. In addition, since the plurality of submodules 100 in a state stably coupled through the barrier assembly 200 may be accommodated within the housing 300, the assemblability of the battery module 10 may increase.

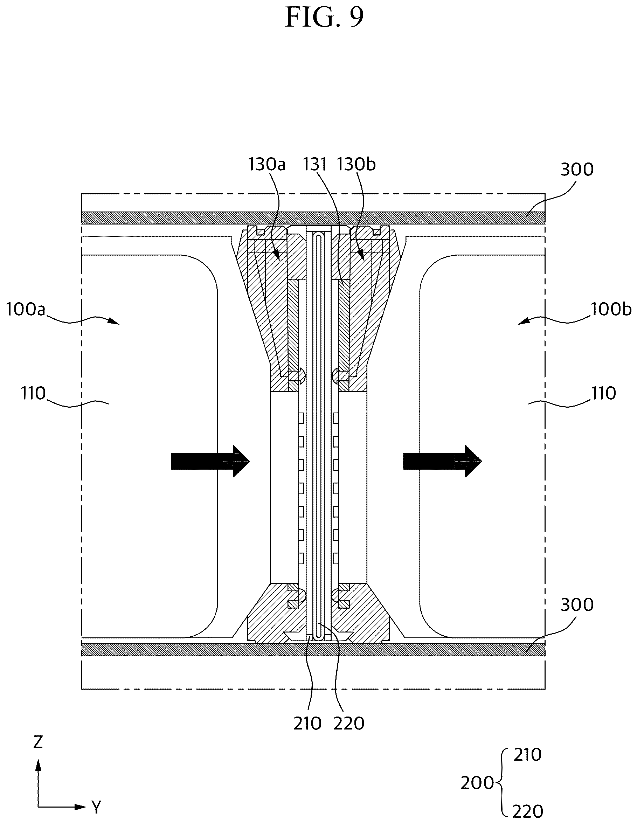

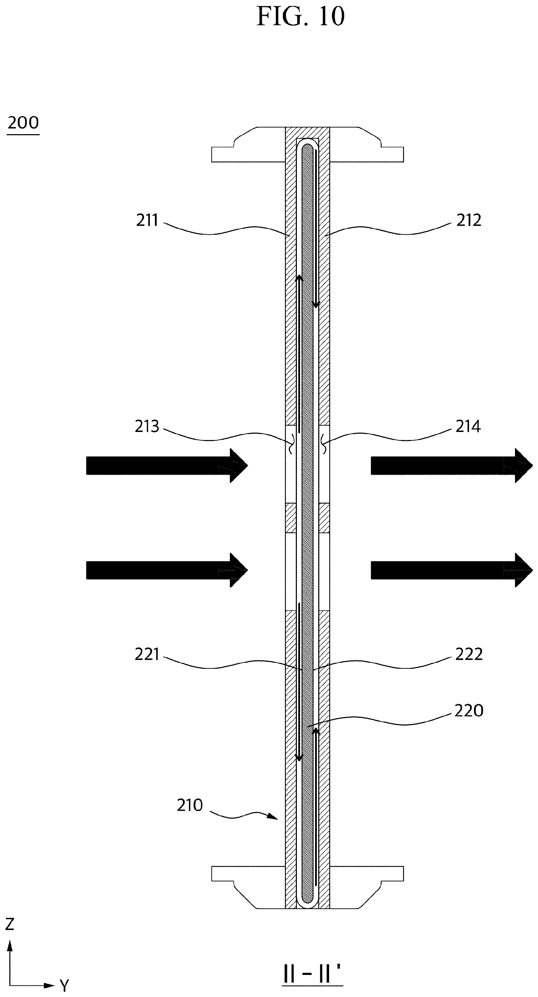

Hereinafter with reference to FIGS. 9 and 10, a flow of an insulating fluid within the battery module 10 is described.

FIG. 9 is a reference diagram for illustrating a flow of an insulating fluid within the battery module 10.

FIG. 10 is an example cross-sectional view taken along section II-II' of FIG. 4.

Since the battery module 10 described in FIGS. 9 and 10 includes all features of the battery module 10 described above in FIGS. 1 to 8, an overlapping description may be omitted.

In example embodiments, the battery module 10 may be configured so that an insulating fluid may be in direct contact with the battery cells 110 while circulating within the housing 300 to cool the battery cells 110.

Referring to FIG. 9, the insulating fluid, while passing through the first submodule 100a accommodated within the housing 300, may be in contact with the battery cells 110 of the first submodule 100a to cool the battery cells 110, and then, may flow through the barrier assembly 200 to the second submodule 100b.

The insulating fluid after absorbing thermal energy from the first submodule 100a may, while flowing along the heat dissipation member 220 of the barrier assembly 200, dissipate heat and cool through the heat dissipation member 220 having high thermal conductivity and may flow into the second submodule 100b with a temperature decreased back.

Subsequently, the insulating fluid may cool the battery cells 110 of the second submodule 100b while passing through the second submodule 100b, and then, be discharged outside the battery module 10 through the outlet 420 of the housing 300.

With reference to FIGS. 9 and 10 together, a flow of the insulating fluid at the barrier assembly 200 is described in more detail.

The insulating fluid after passing through the first submodule 100a may flow inside the heat insulating cover 210 through the first opening part 213 provided on the first heat insulating part 211. The heat dissipation member 220 is positioned inside the heat insulating cover 210 to allow the insulating fluid to dissipate heat and cool.

In this case, the first opening part 213 may be positioned at a central area of the first heat insulating part 211 in the height direction (the Z-axis direction) of the barrier assembly 200, and the heat dissipation member 220 may include the first guide groove 221 leading the insulating fluid entering through the first opening part 213 to flow in the height direction (the Z-axis direction) of the barrier assembly 200. According to this structure, compared to a case that the first opening part 213 is positioned to one side in the height direction (the Z-axis direction) of the barrier assembly 200, the insulating fluid may be led to spread evenly along the surface of the heat dissipation member 220. Accordingly, there is an advantage of further increasing a contact time and a contact area of the insulating fluid and the heat dissipation member 220.

The insulating fluid after flowing up and down along the first guide groove 221 flows back toward the central area of the barrier assembly 200 along the second guide groove 222 and exits outside the barrier assembly 200 through the second opening part 214 of the second heat insulating part 212 to flow toward the second submodule 100b. Similarly to the first opening part 213, the second opening part 214 may also be positioned at a central area of the second heat insulating part 212 in the height direction (the Z-axis direction) of the barrier assembly 200. In this case, the first opening part 213 and at least a portion of an area of the second opening part 214 may be positioned to face each other with the heat dissipation member in between. Therefore, the insulating fluid entering through the central area of the barrier assembly 200 may flow to surround the heat dissipation member 220 inside the barrier assembly 200, and then, be discharged through the central area of the barrier assembly 200 again.

As above, the barrier assembly 200 according to example embodiments may have a structure in which the insulating fluid may be sufficiently in contact with the surface of the heat dissipation member 220 while flowing from the first opening part 213 to the second opening part 214, ensuring the contact area and the contact time between the insulating fluid and the heat dissipation member 220 maximally and cooling the insulating fluid effectively. In addition, as multiple corrugated structures are formed on the surface of the heat dissipation member 220 by the guide grooves 221, 222, the contact area between the insulating fluid and the heat dissipation member 220 may be further maximized, increasing the heat dissipation and cooling efficiency of the insulating fluid.

As described above, according to example embodiments, by positioning the barrier assembly 200, which has both effects of thermal insulation between the plurality of submodules 100 and heat dissipation of the coolant, between the plurality of submodules 100, the battery module 10 with highly excellent thermal stability may be implemented.

The barrier assembly 200 may have a composite barrier structure in which the heat insulating cover 210 formed of a material with thermal insulation effect and the heat dissipation member 220 with more excellent thermal conductivity than the heat insulating cover 210 are coupled, thus having the effects of thermal insulation and cooling the coolant simultaneously.

In particular, in a structure of "long module" in which the plurality of submodules 100 are positioned along the length direction of the battery module 10, the heat insulating cover 210 may effectively block thermal propagation between the plurality of submodules 100, thus blocking the occurrence of serial ignitions due to a flame transfer between the plurality of submodules 100 in a thermal runaway situation.

Further, the heat dissipation member 220 positioned together with the heat insulating cover 210 may effectively cool the coolant between the plurality of submodules 100, increasing the cooling performance of the battery module 10 and decreasing a temperature variation in the length direction of the battery module 10. Accordingly, in the battery module 10 having a cooling structure in which the insulating fluid may directly cool the battery cells 110, the cooling efficiency of the entire battery module 10 may increase.

In addition, since the barrier assembly 200 is coupled directly to the plurality of neighboring submodules 100, the submodules may be maintained in a state stably coupled to each other within the housing 300, thus increasing the structural stability of the battery module 10.

While various example embodiments of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned example embodiments may be implemented with some elements removed, and each example embodiment may be implemented in combination with each other.

### [Description of symbols]

10... Battery module; 100... Submodule;
100a... First submodule; 100b... Second submodule;
110... Battery cell; 120... Protective member;
130... Busbar assembly; 140... Connection substrate;
200... Barrier assembly; 210... Heat insulating cover;
211... First heat insulating part; 212... Second heat insulating part;
213... First opening part; 214... Second opening part;
215... Insertion hole; 216... Fastening flange;
217... Fastening member; 220... Heat dissipation member;
221... First guide groove; 222... Second guide groove;
300... Housing; 310... Terminal;
400... End plate; 410... Inlet;
420... Outlet

## Claims

1. A battery module comprising:
a first cell stack and a second cell stack, each with a plurality of battery cells stacked;
a housing having an internal space in which the first cell stack and the second cell stack are accommodated;
an insulating fluid configured to flow in the internal space of the housing;
and
a barrier assembly positioned between the first cell stack and the second cell stack,
wherein the barrier assembly comprises:
a heat insulating cover configured to block thermal propagation between the first cell stack and the second cell stack; and
a heat dissipation member in contact with the insulating fluid and including a material with higher thermal conductivity than the heat insulating cover.

2. The battery module of claim 1,
wherein the heat insulating cover includes a first heat insulating part and a second heat insulating part positioned along a direction in which the first cell stack and the second cell stack are positioned, and
wherein the heat dissipation member is positioned between the first heat insulating part and the second heat insulating part.

3. The battery module of claim 2,
wherein the heat dissipation member has a plate-type structure,
wherein the first heat insulating part covers at least a portion of an area of a first surface of the heat dissipation member, and
wherein the second heat insulating part covers at least a portion of an area of a second surface that is an opposite surface to the first surface of the heat dissipation member.

4. The battery module of claim 3,
wherein the heat dissipation member further includes a plurality of guide grooves positioned on each of the first surface and the second surface and configured to guide a flow direction of the insulating fluid.

5. The battery module of claim 4,
wherein at least one of the plurality of guide grooves extends in a direction intersecting with a stacking direction of the plurality of battery cells.

6. The battery module of claim 4,
wherein, at an edge of the heat dissipation member, the plurality of guide grooves of the first surface are connected to the plurality of guide grooves of the second surface.

7. The battery module of claim 2,
wherein the heat insulating cover further includes one or more first opening parts positioned in the first heat insulating part and one or more second opening parts positioned in the second heat insulating part.

8. The battery module of claim 7,
wherein the one or more first opening parts and at least a portion of an area of the one or more second opening parts are positioned to face each other with the heat dissipation member in between.

9. The battery module of claim 7,
wherein each of the one or more first opening parts and the one or more second opening parts is provided in plurality and positioned along a stacking direction of the plurality of battery cells.

10. The battery module of claim 1,
wherein an insertion hole is provided at an edge of the heat insulating cover to allow insertion of the heat dissipation member.

11. The battery module of claim 1, further comprising:
a first busbar assembly configured to electrically connect the plurality of battery cells of the first cell stack and positioned to face one surface of the barrier assembly; and
a second busbar assembly configured to electrically connect the plurality of battery cells of the second cell stack and positioned to face an opposite surface to the one surface of the barrier assembly.

12. The battery module of claim 11,
wherein the heat insulating cover is coupled to the first busbar assembly and the second busbar assembly, respectively.

13. The battery module of claim 11,
wherein the heat insulating cover is formed of an insulating material.

14. The battery module of claim 11,
wherein at least one of the first busbar assembly and the second busbar assembly includes a connection terminal connected to one or more terminals exposed outside the housing.

15. The battery module of claim 1,
wherein the first cell stack and the second cell stack are positioned along a direction perpendicular to a stacking direction of the plurality of battery cells in the internal space of the housing.
